Europäisches Patentamt

European Patent Office

Office européen des brevets

(19)

(11) Veröffentlichungsnummer : **0 370 174 B1**

(12) # EUROPÄISCHE PATENTSCHRIFT

(45) Veröffentlichungstag der Patentschrift :
03.02.93 Patentblatt 93/05

(51) Int. Cl.$^5$ : **G01F 1/075**, G01F 1/115,
G01F 15/06

(21) Anmeldenummer : 89115004.7

(22) Anmeldetag : 14.08.89

(54) Induktiver Umdrehungssensor für Flügelrad-Durchflussmesser.

(30) Priorität : 27.10.88 CH 4017/88

(43) Veröffentlichungstag der Anmeldung :
30.05.90 Patentblatt 90/22

(45) Bekanntmachung des Hinweises auf die
Patenterteilung :
03.02.93 Patentblatt 93/05

(84) Benannte Vertragsstaaten :
AT BE CH DE FR GB IT LI NL SE

(56) Entgegenhaltungen :
EP-A- 0 029 336
WO-A-87/06354

(56) Entgegenhaltungen :
WO-A-88/04408
DE-A- 2 943 184
GB-A- 2 020 817
US-A- 3 996 800

(73) Patentinhaber : GWF Gas- &
Wassermesserfabrik AG
Obergrundstrasse 119
CH-6002 Luzern (CH)

(72) Erfinder : Bruhin, Leo
Dorfstrasse 4b
CH-6331 Hünenberg (CH)

(74) Vertreter : Reichmuth, Hugo Werner
INVENTIO AG Seestrasse 55
CH-6052 Hergiswil/NW (CH)

## Beschreibung

Die Erfindung betrifft einen induktiven Umdrehungssensor für Flügelrad-Durchflussmesser, mit mindestens einer stationären Spule, mittels welcher ein Wechselfeld erzeugt wird, mit einem mit dem Flügelrad des Durchflussmessers an der Spule vorbeirotierenden, elektrisch leitenden Dämpfungskörper, wobei durch das Wechselfeld der Spule im Dämpfungskörper ein Wirbelstrom und damit ein Gegenfeld erzeugt wird, das auf das Wechselfeld der Spule zurückwirkt, und mit einer das Ergebnis der Rückwirkung des Dämpfungskörpers verarbeitenden Auswerteschaltung.

In der CH-Patentschrift 509 573 wird als allgemein bekannter Stand der Technik dargelegt, dass man im magnetischen Feld einer Spule zu Messzwecken ein bewegliches Konstruktionselement aus einem leitenden Medium anordnen kann. In diesem Medium werden Wirbelströme induziert, die ihrerseits ein Gegenfeld aufbauen, das auf die Spule rückwirkt und dadurch eine Änderung ihrer elektrischen Eigenschaften verursacht.

Mit der DE-OS- 32 41 222 ist eine Drehzahlmesseinrichtung für einen Flügelrad-Durchflussmesser bekannt geworden, die nach vorstehend geschildertem Prinzip arbeitet. Hierbei ist am Flügelrad ein Metallstück angeordnet, das beim Drehen an einer in eine Gehäusewand eingesetzten Topfspule vorbeistreicht. Die Topfspule ist Teil eines Rückkopplungstransformators eines Generators, dessen Schwingungen immer dann abreissen, wenn das Metallstück an der Topfspule vorbeistreicht und dieser Energie entzieht. Ein Schwingungsdetektor formt die so entstehenden Schwingungspakete zwecks Weiterverarbeitung und Ermittlung der Geschwindigkeit des Flügelrades in Rechteckimpulse um. Bei dieser Einrichtung wird der Generator ständig gespeist, wobei in der Topfspule eine Feldstärke erzeugt werden muss, die geeignet ist, im Metallstück ausreichend starke Wirbelströme entstehen zu lassen, damit dem Feld der Topfspule genügend Energie entzogen wird und die Schwingung abreisst.

Für die Erzeugung von Wechselfeldern für induktive Durchflussmesser werden häufig, wie beispielsweise aus der DE-OS- 31 33 330 bekannt, LC-Schwingkreise verwendet. Weiterhin ist es zum Beispiel aus der DE-OS- 28 46 538 oder der EP-A- 0 121 734 bekannt, aus Gründen der Energieersparnis die Magnetfelder der Spulen intermittierend durch kurze Impulse zu erregen.

Mit der WO 87/06354 ist ein induktiver Näherungssensor bekannt geworden, der auch für einen Wasserzähler verwendet werden kann. Zu diesem Zweck ist ein mit dem Flügelrad des Wasserzählers gekoppeltes Dämpfungsglied vorgesehen, das am Näherungssensor vorbeirotiert. Der Näherungssensor weist einen Quarzoscillator und eine Teilerschaltung auf, welche Gleichspannungsimpulse erzeugt. Die Gleichspannungsimpulse werden einem LC-Serienschwingkreis zugeführt, der durch jeden der Impulse zu einer gedämpften Schwingung angeregt wird. Die gedämpfte Schwingung wird induktiv auf eine Sekundärwicklung eines Transformators übertragen, dessen Primärwicklung die Schwingkreisspule bildet. Die Sekundärwicklung ist mit einer Auswerteschaltung verbunden, die aus einer Diskriminatorschaltung und einer Zählerschaltung besteht. Die Diskriminatorschaltung erzeugt für jede Amplitude der gedämpften Schwingung, die einen vorgegebenen Schwellwert übersteigt einen Impuls. Mittels der Zählerschaltung werden die während jeder gedämpften Schwingung auftretenden Impulse gezählt und deren Anzahl mit der bei ungedämpftem Näherungssensor auftretenden Anzahl Impulse verglichen. Die auf diese Art ermittelten Dämpfungsereignisse werden in geeigneter Weise zur Anzeige gebracht.

Aus der DE-A 29 43 184 ist eine Durchflussmesszelle bekannt, die ein Zahnrad aufweist, an welchem vier magnetische Elemente angebracht sind. In einem vorgegebenen Abstand vom Zahnrad sind drei induktive Aufnehmer derart angeordnet, dass die magnetischen Elemente beim rotieren des Zahnrades an diesen vorbei geführt werden, wobei jedesmal der magnetische Fluss geändert wird. Daraus wird ein elektrisches Signal gewonnen, dessen Frequenz für die Ermittlung der Drehgeschwindigkeit verwendet wird. Die Aufnehmer sind jeweils gegeneinander um 4/3 der Teilung der magnetischen Elemente angeordnet, so dass eine der Anzahl der Aufnehmer entsprechende Vervielfachung der Änderungsfrequenz des magnetischen Flusses erzielt werden kann.

Der Erfindung liegt die Aufgabe zugrunde, ausgehend vom vorstehend dargelegten Stand der Technik einen kostengünstigen und energiesparenden induktiven Umdrehungssensor gemäss Oberbegriff zu schaffen, der ausser der Drehzahl auch die Drehrichtung erfasst und rückwirkungsfrei arbeitet.

Diese Aufgabe wird durch die im Patentanspruch 1 gekennzeichnete Erfindung gelöst. Hierbei sind drei konzentrisch um die Rotationsachse des Flügelrades angeordnete Spulen vorgesehen, die über je einen Kondensator parallel geschaltet sind. Die auf diese Weise gebildeten Schwingkreise werden gleichzeitig intermittierend jeweils nur so stark erregt, dass der Dämpfungskörper beim Vorbeirotieren lediglich die Frequenz der Spannung der betreffenden Spule erhöhen kann. Die Spulenspannungen werden einer Auswerteschaltung zugeführt, mittels welcher aus der Differenz der Frequenzen der gedämpften und ungedämpften Spulen die Drehzahl und Drehrichtung des Flügelrades bestimmt wird.

Die mit der Erfindung erzielten Vorteile sind darin zu sehen, dass durch die Auswertung der Phasendifferenz der Spulensignale eine einfache Digitalisierung möglich ist und kein Referenzelement benötigt wird, so dass nur sehr wenig Energie verbraucht wird. Das hierbei vom Wirbelstrom des Dämpfungskörpers erzeugte, relativ schwache Gegenfeld übt nur ein vernachlässigbar schwaches Bremsmoment aus, so dass der erfindungsgemässe Umdrehungssensor praktisch rückwirkungsfrei arbeitet. Durch den geringen Energieverbrauch wird die Verwendung von kleinen, wartungsfreien Langzeitbatterien ermöglicht, so dass eine allgemein bekannte Anforderung an derartige Umdrehungssensoren erfüllt ist. Die mit der Variante gemäss Patentanspruch 2 unter Verzicht der Drehrichtungserkennung erzielten Vorteile liegen darin, dass der Energieverbrauch weiter reduziert werden kann und die Herstellungskosten wegen Wegfalles von Bauteilen billiger werden.

Im folgenden wird die Erfindung anhand zweier auf der Zeichnung dargestellter Ausführungsbeispiele näher erläutert. Es zeigen:

Fig. 1 einen Axialschnitt einer ersten Ausführung des erfindungsgemässen induktiven Umdrehungssensors in schematischer Darstellung,

Fig. 2 eine Draufsicht des induktiven Umdrehungssensors gemäss Fig. 1 in schematischer Darstellung,

Fig. 3 ein Blockschaltbild des induktiven Umdrehungssensors gemäss Fig. 1 und 2,

Fig. 4 eine graphische Darstellung des Spannungsverlaufes zweier Spulen des induktiven Umdrehungssensors,

Fig.5-8 Impulsdiagramme für die Darstellung der Digitalisierung und Phasendiskrimination der Spulenspannungen gemäss Fig. 4,

Fig.9+10 Impulsdiagramme für eine Umdrehung bei maximaler Drehzahl des induktiven Umdrehungssensors gemäss Fig. 3,

Fig. 11 Impulsdiagramme für eine Umdrehung und einen Drittel der maximalen Drehzahl des induktiven Umdrehungssensors gemäss Fig. 3 und

Fig. 12 ein Blockschaltbild einer zweiten Ausführung eines induktiven Umdrehungssensors.

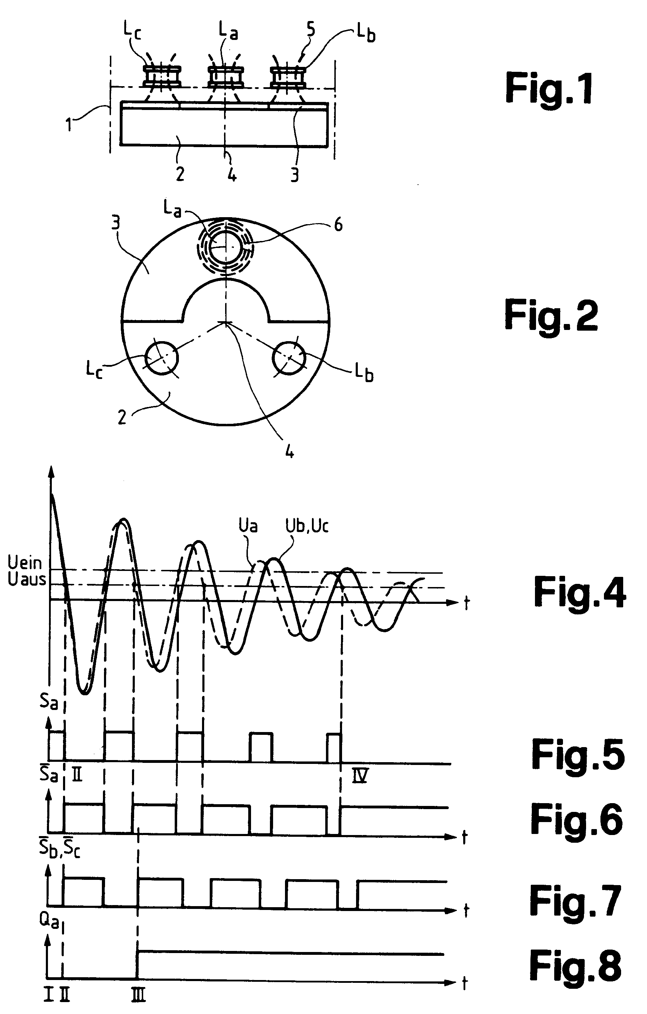

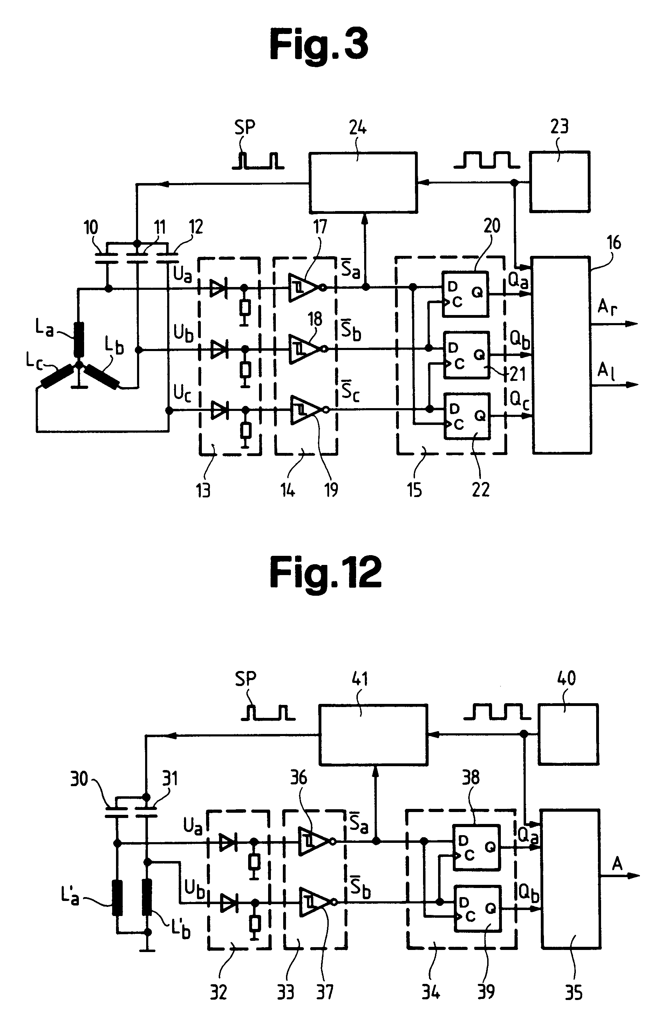

In den Fig. 1 und 2 sind mit 1 ein lediglich strichpunktiert angedeutetes Gehäuse eines Flügelrad-Durchflussmessers und mit 2 ein Flügelrad bezeichnet. Ein aus elektrisch leitendem Material bestehender Dämpfungskörper 3 ist isoliert mit dem Flügelrad 2 verbunden. Im Gehäuse 1 sind drei, konzentrisch um die Rotationsachse 4 des Flügelrades 2 angeordnete, um 120° versetzte Luftspulen $L_a$, $L_b$, $L_c$ befestigt, mittels welchen ein durch gestrichelte Linien angedeutetes Wechselfeld 5 erzeugt wird. Mit 6 sind durch gestrichelte, konzentrische Linien versinnbildlichte Bahnen eines Wirbelstromes bezeichnet, der durch das Wechselfeld 5 der jeweils betreffenden Luftspule $L_a$, $L_b$ oder $L_c$ im Dämpfungskörper 3 hervorgerufen wird.

Gemäss Fig. 3 sind die drei Luftspulen $L_a$, $L_b$, $L_c$ über je einen Kondensator 10, 11, 12 parallel geschaltet, so dass drei parallel geschaltete Serieschwingkreise gebildet werden. Je ein Ende der Luftspulen $L_a$, $L_b$, $L_c$ ist über eine Gleichrichteranordnung 13 an einer Auswerteschaltung angeschlossen, die aus einem Digitalisierungsglied 14, einem Phasendiskriminator 15 und einem Schaltwerk 16 besteht. Das Digitalisierungsglied 14 besteht aus einem ersten, zweiten und dritten Schmitt-Trigger 17, 18, 19, deren Eingänge über die Gleichrichteranordnung 13 mit den Enden der Luftspulen $L_a$, $L_b$, $L_c$ in Verbindung stehen. Der Phasendiskriminator 15 weist ein erstes, zweites und drittes D-Flip-Flop 20, 21, 22 auf, deren Dateneingänge D mit invertierenden Ausgängen $\overline{S}_a$, $\overline{S}_b$, $\overline{S}_c$ der Schmitt-Trigger 17, 18, 19 verbunden sind. Der Takteingang C des ersten D-Flip-Flops 20 ist am invertierenden Ausgang $\overline{S}_b$ des zweiten Schmitt-Triggers 18, der Takteingang C des zweiten D-Flip-Flops 21 am invertierenden Ausgang $\overline{S}_c$ des dritten Schmitt-Triggers 19, und der Takteingang C des dritten D-Flip-Flops 22 am invertierenden Ausgang $\overline{S}_a$ des ersten Schmitt-Triggers 17 angeschlossen. Das Schaltwerk 16 ist eingangsseitig mit einem Taktgenerator 23 und den Ausgängen $Q_a$, $Q_b$, $Q_c$ der D-Flip-Flops 20, 21, 22 verbunden. Das Schaltwerk 16 erzeugt pro Umdrehung des Flügelrades 2 einen Impuls und weist zwei Ausgänge $A_r$, $A_l$ auf, wobei der eine Ausgang $A_r$ der Rechtsdrehung und der andere Ausgang $A_l$ der Linksdrehung des Flügelrades 2 zugeordnet ist. Die in Abhängigkeit von der Drehrichtung jeweils am betreffenden Ausgang $A_r$ oder $A_l$ auftretenden Impulse werden einer nicht weiter dargestellten Anzeigeeinrichtung zugeführt. Eine Einrichtung 24 zur Erzeugung von Speisespannungsimpulsen SP ist eingangsseitig mit dem Taktgenerator 23 und dem invertierenden Ausgang $\overline{S}_a$ des ersten Schmitt-Triggers 17 verbunden und ausgangsseitig über die Kondensatoren 10, 11, 12 an den Luftspulen $L_a$, $L_b$, $L_c$ angeschlossen. Die Frequenz der Speisespannungsimpulse SP wird vom Taktgenerator 23 bestimmt und entspricht dem dreifachen der maximalen Drehzahl des Flügelrades 2. Die Breite eines Speisespannungsimpulses ergibt sich jeweils aus einer Flanke eines Taktgeneratorimpulses und dem Ausschaltpunkt des ersten Triggerimpulses (Zeitpunkt II, Fig. 5).

Der vorstehend beschriebene induktive Umdrehungssensor arbeitet wie folgt:

Bei Auftreten eines Speisespannungsimpulses werden die aus den Luftspulen $L_a$, $L_b$, $L_c$ und Kondensatoren 10, 11, 12 bestehenden Serieschwingkreise gleichzeitig angeregt, wobei in jeder Luftspule eine gedämpfte cosinusförmige Schwingung entsteht (Zeitpunkt I, Fig. 4-8). Es möge nun angenommen sein, dass sich der Dämpfungskörper 3 im Zeitpunkt der Anregung im Bereiche der einen Luftspule $L_a$ befindet (Fig. 2), so dass im Dämpfungskörper 3 ein Wirbelstrom 6 induziert wird, dessen Feld die Dämpfung und Resonanzfrequenz des betreffenden Schwingkreises vergrössern. Hierbei tritt an der einen Luftspule $L_a$ eine Spannung $U_a$ auf, die gegenüber den Spannungen $U_b$, $U_c$ der beiden anderen Luftspulen $L_b$, $L_c$ phasenverschoben ist (Fig. 4). Zum Zwecke der Digitalisierung mittels des Digitalisierungsgliedes 14 werden die Spulenspannungen mit Triggerschwellwerten $U_{ein}$, $U_{aus}$ verglichen (Fig. 4), wobei über die Gleichrichteranordnung 13 nur die positiven Amplituden der Spulenspannungen übertragen werden, da sonst die Schwingungen bei den negativen Amplituden durch die internen Schutzdioden der Schmitt-Trigger 17, 18, 19 zu stark gedämpft würden. Bei der Digitalisierung tritt am Ausgang $\overline{S}_a$ des ersten Schmitt-Triggers 17 eine erste Impulsfolge auf (Fig. 6), die sich aus der invertierten Triggerimpulsfolge $S_a$ ergibt, welche bei Abklingen der Schwingung im Zeitpunkt IV (Fig. 5) beendet ist. Auf die gleiche Weise werden an den Ausgängen $\overline{S}_b$, $\overline{S}_c$ des zweiten und dritten Schmitt-Triggers 18, 19 eine zweite und dritte Impulsfolge gleicher Frequenz erzeugt, die jedoch kleiner als die der ersten Impulsfolge ist (Fig. 7). Mit der ersten Impulsfolge als Datensignal und der zweiten Impulsfolge als Taktsignal wird lediglich der Ausgang $Q_a$ des ersten D-Flip-Flops 20 hochgesetzt (Zeitpunkt III, Fig. 8), womit der Phasendiskriminator 15 die momentan gedämpfte Luftspule $L_a$ identifiziert und durch den an den Ausgängen $Q_a$, $Q_b$, $Q_c$ auftretenden Signalzustand 100 gekennzeichnet hat.

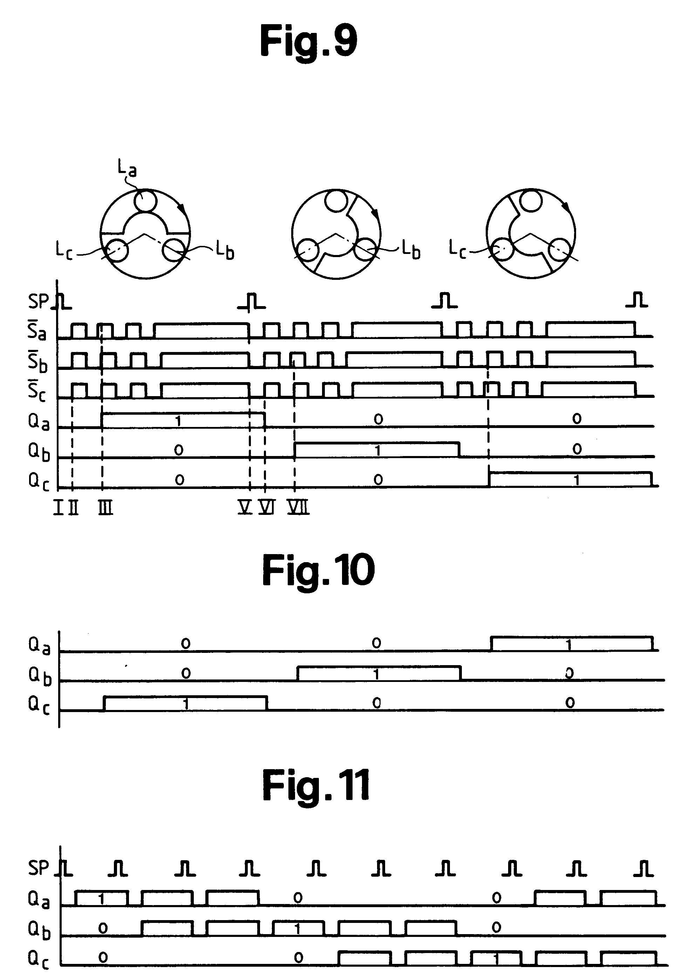

Bei Weiterdrehen des Flügelrades 2 nach rechts und Eintreffen des nächsten Speisespannungsimpulses SP wird die Luftspule $L_b$ gedämpft, wobei die invertierenden Triggerausgänge $\overline{S}_a$, $\overline{S}_b$, $\overline{S}_c$ niedrig gesetzt werden (Zeitpunkt V, Fig. 9). Danach wird wieder die erste, zweite und dritte Impulsfolge erzeugt und der Ausgang $Q_a$ des ersten D-Flip-Flops 20 niedrig gesetzt (Zeitpunkt VI, Fig. 9). Da bei gedämpfter Luftspule $L_b$ die zweite Impulsfolge als Datensignal und die dritte Impulsfolge als Taktsignal wirkt, wird jetzt der Ausgang $Q_b$ des zweiten D-Flip-Flops 21 hochgesetzt (Zeitpunkt VII, Fig. 9), womit der Phasendiskriminator 15 die momentan gedämpfte Luftspule $L_b$ identifiziert und durch den an den Ausgängen $Q_a$, $Q_b$, $Q_c$ auftretenden Signalzustand 010 gekennzeichnet hat. In ähnlicher Weise wird bei Fortsetzung der Rechtsdrehung der Ausgang $Q_c$ des dritten D-Flip-Flops 22 hochgesetzt, so dass für die Charakterisierung der Rechtsdrehung drei aufeinanderfolgende Signalzustände 100, 010 und 001 erzeugt werden. Für die Charakterisierung der Linksdrehung des Flügelrades 2 werden beispielsgemäss, ausgehend von der gedämpften Luftspule $L_c$, die Signalzustände 001, 010 und 100 erzeugt (Fig. 10).

Das Schaltwerk 16 arbeitet derart, dass pro Reihenfolge der Signalzustände, bzw. pro Umdrehung, ein Impuls erzeugt wird, der je nach Drehrichtung an dem einen oder dem anderen Ausgang $A_r$, $A_l$ auftritt. So wird gemäss Beispiel Fig. 9 bei der Reihenfolge 100 010 001 der der Rechtsdrehung zugeordnete Ausgang $A_r$ aktiviert und die Frequenz der hierbei auftretenden Impulse von der Anzeigeeinrichtung als maximale Geschwindigkeit des Flügelrades 2 interpretiert. Es möge nun beispielsweise angenommen sein, dass die Geschwindigkeit des Flügelrades 2 einem Drittel der maximalen Geschwindigkeit entspricht. Hierbei wird während einer Umdrehung entsprechend der gewählten Form des Dämpfungskörpers 3 jede Luftspule mehrere Male gedämpft, wobei die drehrichtungsspezifische Reihenfolge der Signalzustände dreimal so langsam abläuft (Fig. 11, Rechtsdrehung). Auch in diesem Fall wird pro Reihenfolge nur ein Impuls erzeugt, so dass die Frequenz der am zugeordneten Ausgang $A_r$ auftretenden Impulse infolge der langsamer ablaufenden Reihenfolge dreimal kleiner als die Maximalfrequenz ist, so dass die Anzeigeeinrichtung eine dreimal kleinere Geschwindigkeit anzeigt.

In der Fig. 12 sind mit $L_a^{'}$ und $L_b^{'}$ zwei Luftspulen bezeichnet, die über je einen Kondensator 30, 31 parallel geschaltet sind, so dass zwei parallel geschaltete Serieschwingkreise gebildet werden. Die Luftspulen $L_a^{'}$ und $L_b^{'}$ sind ähnlich der Ausführung gemäss Fig. 1 und 2 im Gehäuse des Flügelrad-Durchflussmessers befestigt, wobei sie jedoch auf einem Durchmesser des Flügelrades, symmetrisch zur Rotationsachse, angeordnet sind. Je ein Ende der Luftspulen $L_a^{'}$, $L_b^{'}$ ist über eine Gleichrichteranordnung 32 an einer Auswerteschaltung angeschlossen, die aus einem Digitalisierungsglied 33, einem Phasendiskriminator 34 und einem Schaltwerk 35 besteht. Das Digitalisierungsglied 33 weist einen ersten und zweiten Schmitt-Trigger 36, 37 auf, deren Eingänge über die Gleichrichteranordnung 32 mit den Enden der Luftspulen $L_a^{'}$, $L_b^{'}$ in Verbindung stehen. Der Phasendiskriminator 34 besteht aus einem ersten und zweiten D-Flip-Flop 38, 39, deren Dateneingänge D mit invertierenden Ausgängen $\overline{S}_a$, $\overline{S}_b$ der Schmitt-Trigger 36, 37 verbunden sind. Der Takteingang C des ersten D-Flip-Flops 38 ist am invertierenden Ausgang $\overline{S}_b$ des zweiten Schmitt-Triggers 37, und der Takteingang C des zweiten D-Flip-Flops 39 am invertierenden Ausgang $\overline{S}_a$ des ersten Schmitt-Triggers 36 angeschlossen. Das Schaltwerk 35 ist eingangsseitig mit einem Taktgenerator 40 und den Ausgängen $Q_a$, $Q_b$ der D-Flip-Flops 38, 39 verbunden. Das Schaltwerk 35 erzeugt pro Umdrehung des Flügelrades einen Impuls und weist einen Ausgang A auf, über welchen die Impulse einer nicht weiter dargestellten Anzeigeeinrichtung zugeführt werden. Eine Einrichtung 41 zur Erzeugung von Speisespannungsimpulsen ist eingangsseitig mit dem Taktgenerator 40 und dem invertierenden Ausgang $\overline{S}_a$ des ersten Schmitt-Triggers 36 verbunden und ausgangsseitig über die Kondensatoren 30, 31 an den Luftspulen $L_a^{'}$, $L_b^{'}$ angeschlossen. Die Frequenz der Speisespannungsimpulse wird vom Taktgenerator 40 bestimmt und entspricht dem zweifachen der maximalen Drehzahl des Flügelrades.

Der vorstehend beschriebene induktive Umdrehungssensor arbeitet in gleicher Weise wie der anhand der Fig. 1-3 beschriebene. Da jedoch nur zwei Luftspulen $L_a'$, $L_b'$ vorgesehen sind, erscheinen an den Ausgängen $Q_a$, $Q_b$ des Phasendiskriminators 34 pro Umdrehung die Signalzustände 10 01 bzw. 01 10, womit das Schaltwerk 35 die Drehrichtung nicht erkennen, sondern lediglich die Umdrehungsimpulse in geschwindigkeitsabhängiger Frequenz erzeugen kann.

**Patentansprüche**

1. Induktiver Umdrehungssensor für Flügelrad-Durchflussmesser, mit mindestens einer stationären Spule, mittels welcher ein Wechselfeld erzeugt wird, mit einem mit dem Flügelrad (2) des Durchflussmessers an der Spule vorbeirotierenden, elektrisch leitenden Dämpfungskörper (3), wobei durch das Wechselfeld der Spule im Dämpfungskörper (3) ein Wirbelstrom und damit ein Gegenfeld erzeugt wird, das auf das Wechselfeld der Spule zurückwirkt, und mit einer das Ergebnis der Rückwirkung des Dämpfungskörpers (3) verarbeitenden Auswerteschaltung, **dadurch gekennzeichnet,**
   - dass drei konzentrisch um die Rotationsachse (4) des Flügelrades (2) angeordnete, um 120° versetzte, stationäre Spulen ($L_a$, $L_b$, $L_c$) vorgesehen sind,
   - dass die drei Spulen ($L_a$, $L_b$, $L_c$) über je einen Kondensator (10, 11, 12) parallel geschaltet sind, wobei die einen Enden der drei Spulen ($L_a$, $L_b$, $L_c$) an Masse liegen, und die anderen Enden mit der Auswerteschaltung und über die Kondensatoren (10, 11, 12) mit einer Einrichtung (24) zur Erzeugung von Speisespannungsimpulsen (SP) verbunden sind, welche eingangsseitig an einem Taktgenerator (23) angeschlossen ist,
   - dass die Spulen ($L_a$, $L_b$, $L_c$) wie an sich bekannt intermittierend gespeist werden, wobei die Frequenz der Speisespannungsimpulse (SP) einem Mehrfachen der maximalen Drehzahl des Flügelrades (2) entspricht, und
   - wobei jeweils die Frequenz der Spannung derjenigen Spule erhöht wird, an welcher der Dämpfungskörper (3) vorbeirotiert, und
   - dass in der Auswerteschaltung ein Digitalisierungsglied (14) vorgesehen ist, das den Spannungsverläufen der Spulen ($L_a$, $L_b$, $L_c$) entsprechende Impulsfolgen erzeugt, wobei die Impulsfolge der jeweils gedämpften Spule eine höhere Frequenz als die Impulsfolgen der ungedämpften Spulen aufweist, und wobei während einer Umdrehung aus den aufeinanderfolgenden Wechseln der relativen Lage der Impulse der gedämpften Spule zu den Impulsen der ungedämpften Spulen die Drehrichtung und die Drehzahl des Flügelrades (2) ermittelbar ist.

2. Induktiver Umdrehungssensor für Flügelrad-Durchflussmesser, mit mindestens einer stationären Spule, mittels welcher ein Wechselfeld erzeugt wird, mit einem mit dem Flügelrad des Durchflussmessers an der Spule vorbeirotierenden, elektrisch leitenden Dämpfungskörper, wobei durch das Wechselfeld der Spule im Dämpfungskörper ein Wirbelstrom und damit ein Gegenfeld erzeugt wird, das auf das Wechselfeld der Spule zurückwirkt, und mit einer das Ergebnis der Rückwirkung des Dämpfungskörpers verarbeitenden Auswerteschaltung, **dadurch gekennzeichnet,**
   - dass zwei auf einem Durchmesser des Flügelrades symmetrisch zur Rotationsachse des Flügelrades angeordnete stationäre Spulen ($L_a'$, $L_b'$) vorgesehen sind,
   - dass die zwei Spulen ($L_a'$, $L_b'$) über je einen Kondensator (30, 31) parallel geschaltet sind, wobei die einen Enden der zwei Spulen ($L_a'$, $L_b'$) an Masse liegen, und die anderen Enden mit der Auswerteschaltung und über die Kondensatoren (30, 31) mit einer Einrichtung (41) zur Erzeugung von Speisespannungsimpulsen (SP) verbunden sind, welche eingangsseitig an einem Taktgenerator (40) angeschlossen ist,
   - dass die Spulen ($L_a'$, $L_b'$) wie an sich bekannt intermittierend gespeist werden, wobei die Frequenz der Speisespannungsimpulse (SP) einem Mehrfachen der maximalen Drehzahl des Flügelrades entspricht, und
   - wobei jeweils die Frequenz der Spannung derjenigen Spule erhöht wird, an welcher der Dämpfungskörper vorbeirotiert und,
   - dass in der Auswerteschaltung ein Digitalisierungsglied (33) vorgesehen ist, das den Spannungsverläufen der Spulen ($L_a'$, $L_b'$) entsprechende Impulsfolgen erzeugt, wobei die Impulsfolge der jeweils gedämpften Spule eine höhere Frequenz als die Impulsfolge der ungedämpften Spule aufweist, und wobei während einer Umdrehung aus dem Wechsel der relativen Lage der Impulse der gedämpften Spule zu den Impulsen der ungedämpften Spule die Drehzahl des Flügelrades ermittelbar ist.

3. Induktiver Umdrehungssensor, nach den Patentansprüchen 1 und 2, **dadurch gekennzeichnet,** dass die Spulenenden über eine Gleichrichteranordnung (13, 32) an der Auswerteschaltung angeschlossen sind, so dass ausschliesslich die positiven Amplituden der Spulenspannungen übertragen werden

4. Induktiver Umdrehungssensor nach Patentanspruch 3,
**dadurch gekennzeichnet,**
dass die Auswerteschaltung einen Phasendiskriminator (15, 34) und ein Schaltwerk (16, 35) aufweist, die in Serieschaltung mit dem Digitalisierungsglied (14, 33) verbunden sind.

5. Induktiver Umdrehungssensor nach Patentanspruch 1 in Verbindung mit Patentanspruch 4,
**dadurch gekennzeichnet,**
- dass das Digitalisierungsglied (14) aus einem ersten, zweiten und dritten Schmitt-Trigger (17, 18, 19) besteht, deren Eingänge über die Gleichrichteranordnung (13) mit den Enden der Spulen ($L_a$, $L_b$, $L_c$) in Verbindung stehen,
- dass der Phasendiskriminator (15) ein erstes, zweites und drittes D-Flip-Flop (20, 21, 22) aufweist, deren Dateneingänge (D) mit invertierenden Ausgängen ($\overline{S}_a$, $\overline{S}_b$, $\overline{S}_c$) der Schmitt-Trigger (17, 18, 19) verbunden sind, und der Takteingang (C) des ersten D-Flip-Flops (20) am invertierenden Ausgang ($\overline{S}_b$) des zweiten Schmitt-Triggers (18), der Takteingang (C) des zweiten D-Flip-Flops (21) am invertierenden Ausgang ($\overline{S}_c$) des dritten Schmitt-Triggers (19), und der Takteingang (C) des dritten D-Flip-Flops (22) am invertierenden Ausgang ($\overline{S}_a$) des ersten Schmitt-Triggers (17) angeschlossen ist,
- dass das Schaltwerk (16) eingangsseitig mit den Ausgängen ($Q_a$, $Q_b$, $Q_c$) der D-Flip-Flops (20, 21, 22) und dem Taktgenerator (23) verbunden ist und zwei Ausgänge ($A_r$, $A_l$) aufweist,
- wobei das Schaltwerk (16) pro Umdrehung des Flügelrades (2) einen Impuls erzeugt, und die erzeugten Impulse bei Rechtsdrehung an dem einen Ausgang ($A_r$) und bei Linksdrehung an dem anderen Ausgang ($A_l$) auftreten.

6. Induktiver Umdrehungssensor nach Patentanspruch 2 in Verbindung mit Patentanspruch 4,
**dadurch gekennzeichnet,**
- dass das Digitalisierungsglied (33) aus einem ersten und zweiten Schmitt-Trigger (36, 37) besteht, deren Eingänge über die Gleichrichteranordnung (32) mit den Enden der Spulen ($L'_a$, $L'_b$) in Verbindung stehen,
- dass der Phasendiskriminator (34) ein erstes und zweites D-Flip-Flop (38, 39) aufweist, deren Dateneingänge (D) mit invertierenden Ausgängen ($\overline{S}_a$, $\overline{S}_b$) der Schmitt-Trigger (36, 37) verbunden sind, und der Takteingang (C) des ersten D-Flip-Flops (38) am invertierenden Ausgang ($\overline{S}_b$) des zweiten Schmitt-Triggers (37), sowie der Takteingang (C) des zweiten D-Flip-Flops (39) am invertierenden Ausgang ($\overline{S}_a$) des ersten Schmitt-Triggers (36) angeschlossen ist,
- dass das Schaltwerk (35) eingangsseitig mit den Ausgängen ($Q_a$, $Q_b$) der D-Flip-Flops (38, 39) und dem Taktgenerator (40) verbunden ist und einen Ausgang (A) aufweist,
- wobei das Schaltwerk (35) pro Umdrehung des Flügelrades einen Impuls erzeugt und die erzeugten Impulse am Ausgang (A) auftreten.

7. Induktiver Umdrehungssensor, nach den Patentansprüchen 1 und 2,
**dadurch gekennzeichnet,**
dass die Spulen ($L_a$, $L_b$, $L_c$ bzw. $L'_a$, $L'_b$) Luftspulen sind.

## Claims

1. Inductive rotation sensor for impeller wheel throughflow meters, with at least one stationary coil, by means of which an alternating field is generated, with an electrically conductive damping body (3) rotating with the impeller wheel (2) of the throughflow meter past the coil, wherein an eddy current and thereby an opposing field, which reacts on the alternating field of the coil, is generated in the damping body (3) by the alternating field of the coil, and with an evaluating circuit processing the result of the reaction of the damping body (3), characterised thereby,
- that three stationary coils ($L_a$, $L_b$, $L_c$) are provided and arranged displaced through 120° concentrically about the rotational axis (4) of the impeller wheel (2),
- that the three coils ($L_a$, $L_b$, $L_c$) are connected in parallel each by way of a respective capacitor (10, 11, 12), wherein the one ends of the three coils ($L_a$, $L_b$, $L_c$) are at ground and the other ends are connected with the evaluating circuit and by way of the capacitors (10, 11, 12) with an equipment (24) for the generation of supply voltage pulses (SP), which is connected at the input to a clock pulse generator (23),
- that the coils ($L_a$, $L_b$, $L_c$) are as per se known fed intermittently, wherein the frequency of the supply voltage pulses (SP) corresponds to a multiple of the maximum rotational speed of the impeller wheel (2) and
- wherein the respective frequency of the voltage of that coil is increased, past which the damping body (3) is rotating, and

- that a digitalising member (14), which produces pulse sequences corresponding to the voltage courses of the coils ($L_a$, $L_b$, $L_c$), is provided in the evaluating circuit, wherein the pulse sequence of the respectively damped coil has a higher frequency than the pulse sequences of the undamped coils and wherein the rotational direction and the rotational speed of the impeller wheel (2) is ascertainable from the successive changes in the position of the pulse of the damped coil relative to the pulses of the undamped coils during one rotation.

2. Inductive rotation sensor for impeller wheel throughflow meters, with at least one stationary coil, by means of which an alternating field is generated, with an electrically conductive damping body rotating with the impeller wheel of the throughflow meter past the coil, wherein an eddy current and thereby an opposing field, which reacts on the alternating field of the coil, is generated in the damping body by the alternating field of the coil, and with an evaluating circuit processing the result of the reaction of the damping body, characterised thereby

- that two stationary coils ($L_a'$, $L_b'$) are provided and arranged symmetrically to the rotational axis of the impeller wheel,

- that the two coils ($L_a'$, $L_b'$) are connected in parallel each by way of a respective capacitor (30, 31), wherein the one ends of the two coils ($L_a'$, $L_b'$) are at ground and the other ends are connected with the evaluating circuit and by way of the capacitors (30, 31) with an equipment (41) for the generation of supply voltage pulses (SP), which is connected at the input to a clock pulse generator (40),

- that the coils ($L_a'$, $L_b'$) are per se known fed intermittently, wherein the frequency of the supply voltage pulses (SP) corresponds to a multiple of the maximum rotational speed of the impeller wheel and

- wherein the respective frequency of the voltage of that coil is increased, past which the damping body is rotating, and

- that a digitalising member (33) which produces pulse sequences corresponding to the voltage courses of the coils ($L_a'$, $L_b'$), is provided in the evaluating circuit, wherein the pulse sequence of the respectively damped coil has a higher frequency than the pulse sequences of the undamped coil and wherein the rotational speed of the impeller wheel is ascertainable from the changes in the position of the pulse of the damped coil relative to the pulses of the undamped coil during one rotation.

3. Inductive rotation sensor according to the claims 1 and 2, characterised thereby, that the coil ends are connected to the evaluating circuit by way of a rectifier arrangement (13, 32) so that exclusively the positive amplitudes of the coil voltages are transmitted.

4. Inductive rotation sensor according to claim 3, characterised thereby, that the evaluating circuit has a phase discriminator (15, 34) and a switching mechanism (16, 35), which are connected in series with the digitalising member (14, 33).

5. Inductive rotation sensor according to claim 1 in conjunction with claim 4, characterised thereby,

- that the digitalising member (14) consists of a first, a second and a third Schmitt trigger stage (17, 18, 19), the inputs of which stand in connection with the ends of the coils ($L_a$, $L_b$, $L_c$) by way of the rectifier arrangement (13),

- that the phase discriminator (15) has a first, a second and a third D-flip-flop (20, 21, 22), the data inputs (D) of which are connected with inverting outputs ($\overline{S}_a$, $\overline{S}_b$, $\overline{S}_c$) of the Schmitt trigger stages (17, 18, 19), and the pulse input (C) of the first D-flip-flop (20) is connected to the inverting output ($\overline{S}_b$) of the second Schmitt trigger stage (18), the pulse input (C) of the second D-flip-flop (21) is connected to the inverting output ($\overline{S}_c$) of the third Schmitt trigger stage (19) and the pulse input (C) of the third D-flip-flop (22) is connected to the inverting output ($\overline{S}_a$) of the first Schmitt trigger stage (17), and

- that the switching mechanism (16) is connected at the input with the outputs ($Q_a$, $Q_b$, $Q_c$) of the D-flip-flops (20, 21, 22) and with the clock pulse generator (23) and has two outputs ($A_r$, $A_l$),

- wherein the switching mechanism (16) generates one pulse for each rotation of the impeller wheel (2) and the generated pulses appear at the one output ($A_r$) in the case of right-hand rotation and at the other output ($A_l$) in the case of left-hand rotation.

6. Inductive rotation sensor according to claim 2, in conjunction with claim 4, characterised thereby,

- that the digitalising member (33) consists of a first and a second Schmitt trigger stage (36, 37) the inputs of which stand in connection with the ends of the coils ($L_a'$, $L_b'$) by way of the rectifier arrangement (32),

- that the phase discriminator (34) has a first and a second D-flip-flop (38, 39), the data inputs (D) of which are connected with inverting

outputs ($\overline{S}_a$, $\overline{S}_b$) of the Schmitt trigger stages (36, 37), and the pulse input (C) of the first D-flip-flop (38) is connected to the inverting output ($\overline{S}_b$) of the second Schmitt trigger stage (37) as well as the pulse input (C) of the second D-flip-flop (3a) is connected to the inverting output ($\overline{S}_a$) of the first Schmitt trigger stage (36), and

- that the switching mechanism (35) is connected at the input with the outputs ($Q_a$, $Q_b$) of the D-flip-flops (38, 39) and with the clock pulse generator (40) and has one output (A),
- wherein the switching mechanism (35) generates one pulse for each rotation of the impeller wheel and the generated pulses appear at the output (A).

7. Inductive rotation sensor according to the claims 1 and 2, characterised thereby, that the coils ($L_a$, $L_b$, $L_c$ or $L_a'$, $L_b'$) are air-cored coils.

**Revendications**

1. Détecteur de rotations inductif pour débitmètres à turbine, comportant au moins une bobine stationnaire à l'aide de laquelle est généré un champ alternatif, un corps amortisseur (3) électriquement conducteur qui passe en tournant avec la turbine (2) du débitmètre, devant la bobine, étant précisé que le champ alternatif de la bobine génère dans le corps amortisseur (3) un courant tourbillonnaire et, ainsi, un champ opposé agissant sur le champ alternatif de la bobine, et un circuit d'évaluation qui traite le résultat de la réaction du corps amortisseur (3), caractérisé

   - en ce qu'il est prévu trois bobines à air stationnaires ($L_a$, $L_b$, $L_c$) qui sont disposées de façon concentrique autour de l'axe de rotation (4) de la turbine (2), décalées de 120 °
   - en ce que les trois bobines ($L_a$, $L_b$, $L_c$) sont montées en parallèle par l'intermédiaire de condensateurs respectifs (10, 11, 12), étant précisé que la première extrémité des trois bobines ($L_a$, $L_b$, $L_c$) est à la masse tandis que leur seconde extrémité est reliée au circuit d'évaluation et, par l'intermédiaire des condensateurs (10, 11, 12), à un dispositif (24) qui est destiné à générer des impulsions de tension d'alimentation (SP) et qui est raccordé, côté entrée, à un synchroniseur (23),
   - en ce que les bobines ($L_a$, $L_b$, $L_c$) sont alimentées, d'une manière connue en soi, de façon intermittente, étant précisé que la fréquence des impulsions de tension d'alimentation (SP) correspond à un multiple du nombre de tours maximal de la turbine (2), et
   - que la fréquence de la tension est augmentée sur la bobine devant laquelle le corps amortisseur (3) passe en tournant, et
   - en ce qu'il est prévu, dans le circuit d'évaluation, un élément de numérisation (14) qui génère des trains d'impulsions correspondant aux courbes de tension des bobines ($L_a$, $L_b$, $L_c$), étant précisé que le train d'impulsions de la bobine amortie à chaque fois possède une fréquence supérieure à celle des trains d'impulsions des bobines non amorties, et que pendant une rotation, le sens de rotation et le nombre de tours de la turbine (2) peuvent être calculés à partir des changements successifs de position relative des impulsions de la bobine amortie par rapport aux impulsions des bobines non amorties.

2. Détecteur de rotations inductif pour débitmètres à turbine, comportant au moins une bobine stationnaire à l'aide de laquelle est généré un champ alternatif, un corps amortisseur électriquement conducteur qui passe, en tournant avec la turbine du débitmètre, devant la bobine, étant précisé que le champ alternatif de la bobine générant dans le corps amortisseur un courant tourbillonnaire et, ainsi, un champ opposé agissant sur le champ alternatif de la bobine, et un circuit d'évaluation qui traite le résultat de la réaction du corps amortisseur, caractérisé

   - en ce qu'il est prévu deux bobines stationnaires ($L_a'$, $L_b'$) qui sont disposées sur un diamètre de la turbine, de façon symétrique par rapport à l'axe de rotation de la turbine,
   - en ce que les deux bobines ($L_a'$, $L_b'$) sont montées en parallèle par l'intermédiaire de condensateurs respectifs (30, 31), étant précisé que la première extrémité des deux bobines ($L_a'$, $L_b'$) est à la masse tandis que leur seconde extrémité est reliée au circuit d'évaluation et, par l'intermédiaire des condensateurs (30, 31), à un dispositif (41) qui est destiné à générer des impulsions de tension d'alimentation (SP) et qui est raccordé, côté entrée, à un synchroniseur (40),
   - en ce que les bobines ($L_a'$, $L_b'$) sont alimentées, d'une manière connue en soi, de façon intermittente, étant précisé que la fréquence des impulsions de tension d'alimentation (SP) correspond à un multiple du nombre de tours maximal de la turbine, et
   - que la fréquence de la tension est augmentée sur la bobine devant laquelle le corps amortisseur passe en tournant, et
   - en ce qu'il est prévu, dans le circuit d'évaluation, un élément de numérisation (33) qui génère des trains d'impulsions correspondant aux courbes de tension des bobines ($L_a'$, $L_b'$), étant précisé que le train d'impulsions de la bobine amortie à chaque fois possède une fréquence supérieure à celle du train d'impulsions de la bobine non amortie, et que pendant une rotation, le nombre de tours de la turbine peut être calculé à partir du changement de position relative des impulsions de la bobine amortie par rapport aux impulsions de la bobine non amorties.

3. Détecteur de rotations inductif selon les revendications 1 et 2, caractérisé en ce que les extrémités des bobines sont raccordées au circuit d'évaluation par l'intermédiaire d'un dispositif redresseur (13, 32) de sorte que seules les amplitudes positives des tensions de bobines sont transmises.

4. Détecteur de rotations inductif selon la revendication 3, caractérisé en ce que le circuit d'évaluation possède un discriminateur de phase (15, 34) et un mécanisme de commutation (16, 35) qui sont reliés, montés en série, à l'élément de numérisation (14, 33).

5. Détecteur de rotations inductif selon la revendication 1 associée à la revendication 4, caractérisé
- en ce que l'élément de numérisation (14) se compose d'une première, d'une seconde et d'une troisième bascule de Schmitt (17, 18, 19) dont les entrées sont reliées par l'intermédiaire du dispositif redresseur (13) aux extrémités des bobines à air ($L_a$, $L_b$, $L_c$),
- en ce que le discriminateur de phase (15) possède des premier, second et troisième flip-flops D (20, 21, 22) dont les entrées de données (D) sont reliées à des sorties d'inversion ($\overline{S}_a$, $\overline{S}_b$, $\overline{S}_c$) des bascules de Schmitt (17, 18, 19), et l'entrée de synchronisation (C) du premier flip-flop D (20) est reliée à la sortie d'inversion ($\overline{S}_b$) de la seconde bascule de Schmitt (18) tandis que l'entrée de synchronisation (C) du second flip-flop D (21) est reliée à la sortie d'inversion ($\overline{S}_c$) de la troisième bascule de Schmitt (19) et l'entrée de synchronisation (C) du troisième flip-flop D (22) est reliée à la sortie d'inversion ($\overline{S}_a$) de la première bascule de Schmitt (17),
- en ce que le mécanisme de commutation (16) est relié, côté entrée, aux sorties ($Q_a$, $Q_b$, $Q_c$) des flip-flops D (20, 21, 22) et au synchroniseur (23), et possède deux sorties ($A_r$, $A_l$),
- étant précisé que le mécanisme de commutation (16) génère une impulsion pour chaque tour de la turbine (2) et que les impulsions générées apparaissent à la première sortie ($A_r$) lors d'une rotation vers la droite, et à la seconde sortie ($A_l$) lors d'une rotation vers la gauche.

6. Détecteur de rotations inductif selon la revendication 2 associée à la revendication 4, caractérisé
- en ce que l'élément de numérisation (33) se compose d'une première et d'une seconde bascule de Schmitt (36, 37) dont les entrées sont reliées, par l'intermédiaire du dispositif redresseur (32), aux extrémités des bobines ($L_a'$, $L_b'$),
- en ce que le discriminateur de phase (34) possède des premier et second flip-flops D (38, 39) dont les entrées de données (D) sont reliées à des sorties d'inversion ($\overline{S}_a$, $\overline{S}_b$) des bascules de Schmitt (36, 37), et l'entrée de synchronisation (C) du premier flip-flop D (38) est reliée à la sortie d'inversion ($\overline{S}_b$) de la seconde bascule de Schmitt (37) tandis que l'entrée de synchronisation (C) du second flip-flop D (39) est reliée à la sortie d'inversion ($\overline{S}_a$) de la première bascule de Schmitt (36),
- en ce que le mécanisme de commutation (35) est relié, côté entrée, aux sorties ($Q_a$, $Q_b$) des flip-flops D (38, 39) et au synchroniseur (40), et possède une entrée (A),
- étant précisé que le mécanisme de commutation (35) génère une impulsion pour chaque tour de la turbine et que les impulsions générées apparaissent à la sortie (A).

7. Détecteur de rotations inductif selon les revendications 1 et 2, caractérisé en ce que les bobines ($L_a$, $L_b$, $L_c$ et $L_a'$, $L_b'$) sont des bobines à air.

Fig.1

Fig.2

Fig.4

Fig.5

Fig.6

Fig.7

Fig.8

10

# Fig.3

# Fig.12

11

# Fig. 9

# Fig. 10

# Fig. 11